# EUROPEAN PATENT APPLICATION

(11) **EP 3 208 763 A1**
(43) Date of publication of application: **23.08.2017**
(21) Application number: 15850986.9
(22) Date of filing: 12.05.2015
(51) Int. Cl.: G06Q 30/06, G06T 7/20

(54) **ASSOCIATION PROGRAM, COMPUTER-READABLE MEDIUM, INFORMATION PROCESSING METHOD AND INFORMATION PROCESSING DEVICE**

(30) Priority: 14.10.2014 JP 2014210002
(71) Applicant: Fuji Xerox Co., Ltd., Tokyo 107-0052 (JP)
(72) Inventor: ARAI, Noriko, Yokohama-shi Kanagawa 220-8668 (JP); AMAGAI, Sei, Yokohama-shi Kanagawa 220-8668 (JP); UEJO, Hiroyoshi, Yokohama-shi Kanagawa 220-8668 (JP); UEDA, Kenji, Yokohama-shi Kanagawa 220-8668 (JP); MATSUGUMA, Chihiro, Yokohama-shi Kanagawa 220-8668 (JP)
(74) Representative: Ward, James Norman
(86) International application number: PCT/JP2015/063622
(87) International publication number: WO 2016/059817

(57) **Abstract**

An information processing device 1 includes a person extracting unit 101, a container extracting unit 102, and a product extracting unit 103, a specification unit 104, and an association unit 105. The person extracting unit 101 respectively extracts a person, a container, and a product from an image captured by a camera. The specification unit 104 specifies a movement of putting or withdrawing the product into or from the container. The association unit 105 associates a person, who is in a predetermined relationship with the container into or from which the product is put or withdrawn, with the container when the specification unit 104 specifies the movement.

## Description

### Technical Field

The present invention relates to an association program, a computer-readable medium, an information processing method, and an information processing device.

### Background Art

An information processing device that divides a plurality of persons in a video image into groups is suggested (see, for example, PTL 1).

The information processing device disclosed in PTL 1 detects persons and positions of the persons from a video image and totalizes relative distances of the detected persons to calculate a threshold value of the relative distances from appearance distribution of the relative distances and determine the persons for which a state where a relative distance between persons is less than the threshold value continues for a long time as a group carrying out the same action.

### Citation List

### Patent Literature

[PTL 1] Japanese Patent No. 4506381

### Summary of Invention

### Technical Problem

An object of at least one of embodiments of the present invention is to provide an association program associating a person with a container, a computer-readable medium, an information processing method, and an information processing device.

### Solution to Problem

[1] According to an aspect of the present invention, there is provided an association program causing a computer to function as an extracting unit that extracts a person, a container, and a product from an image captured by a camera, a first specification unit that specifies a movement of the product being transferred into or from the container, and an association unit that associates a person who is in a predetermined relationship with the container into or from which the product is transferred in a case where the first specification unit specifies the movement of the product.
[2] The association program according to [1] may further cause the computer to function as a second specification unit that specifies the movement of the product among a plurality of persons, and in a case where the first specification unit specifies the movement of the product, the association unit may set a time at which the movement is specified as a reference time and in a case where the second specification unit specifies the movement of the product within a time period determined in advance based on the reference time, the association unit may associate a plurality of persons among which the product is moved with the container.
[3] The association program according to [1] or [2] may further cause the computer to function as a third specification unit that specifies a movement of a container among a plurality of persons, and in a case where a third specification unit specifies the movement of the container, the association unit may associate the plurality of persons with each other.
[4] The association program according to any one of [1] to [3] may further cause the computer to function as a fourth specification unit that specifies a line-of-sight or direction of the extracted person, and the association unit may associate a person who is in a predetermined relationship with the line-of-sight or direction specified by the fourth specification unit with the extracted person.
[5] The association program according to any one of [1] to [4] may further cause the computer to function as a voice obtaining unit that obtains the voice of the extracted person and the association unit may associate a person who is in a predetermined relationship in the voice obtained by the voice obtaining unit with the extracted person.
[6] The association program according to any one of [1] to [5] may further cause the computer to function as a fifth specification unit that specifies a movement of the mouth of the extracted person and the association unit associates a person who is in a predetermined relationship with the movement of the mouth specified by the fifth specification unit with the extracted person.
[7] The association program according to any one of [1] to [6] may further cause the computer to function as an attribute obtaining unit that obtains an attribute of the extracted person and a group attribute specification unit that specifies an attribute of a group formed with a plurality of persons associated by the association unit based on the obtained attribute.
[8] The association program according to any one of [1] to [7] may further cause the computer to function as an obtaining unit that obtains information about a product purchased by the extracted person and the association unit may associate the information with a plurality of persons associated.
[9] The association program according to any one of [1] to [7] may further cause the computer to function as an obtaining unit that obtains member information of the extracted person and the association unit may associate the member information with a plurality of persons associated.
[10] According to another aspect of the invention, there is provided an association program causing a computer to function as an extracting unit that extracts a person and a vehicle from an image captured by a camera, a specification unit that specifies a movement of a person getting into the vehicle or getting out of the vehicle, and an association unit that associates a person who is in a predetermined relationship with the vehicle into which or out of which the person gets in a case where the specification unit specifies the movement of the person.
[11] According to still another aspect of the present invention, there is provided an association program causing the computer to function as an extracting unit that extracts a person and a product from an image captured by a camera, a specification unit that specifies a movement of a product among a plurality of persons, and an association unit that associates the plurality of persons among which the product is moved with each other in a case where the specification unit specifies the movement of the product.
[12] According to still another aspect of the present invention, there is provided an association program causing the computer to function as an extracting unit that extracts a person and a container from an image captured by a camera, a specification unit that specifies a movement of the container among a plurality of persons, and an association unit that associates the plurality of persons among which the container is moved with each other in a case where the specification unit specifies the movement of the container.
[13] According to still another aspect of the present invention, there is provided a non-transitory computer-readable medium storing an association program causing a computer to function as an extracting unit that extracts a person, a container, and a product from an image captured by a camera, a first specification unit that specifies a movement of the product being transferred into or from the container, and an association unit that associates a person who is in a predetermined relationship with the container into or from which the product is transferred in a case where the first specification unit specifies the movement of the product.
[14] In the non-transitory computer-readable medium storing the association program according to [13], the association program may further cause the computer to function as a second specification unit that specifies the movement of the product among a plurality of persons, and in a case where the first specification unit specifies the movement of the product, the association unit may set a time at which the movement is specified as a reference time and in a case where the second specification unit specifies the movement of the product within a time period determined in advance based on the reference time, the association unit may associate the a plurality of persons among which the product is moved with the container.
[15] In the non-transitory computer-readable medium storing the association program according to [13] or [14], the association program may further cause the computer to function as a third specification unit that specifies a movement of a container among a plurality of persons, and in a case where the third specification unit specifies the movement of the container, the association unit may associate the plurality of persons with each other.
[16] In the non-transitory computer-readable medium storing the association program according to any one of [13] to [15], the association program may further cause the computer to function as a fourth specification unit that specifies a line-of-sight or direction of the extracted person and the association unit may associate a person who is in a predetermined relationship with the line-of-sight or direction specified by the fourth specification unit with the extracted person.
[17] In the non-transitory computer-readable medium storing the association program according to any one of [13] to [16], the association program may further cause the computer to function as a voice obtaining unit that obtains the voice of the extracted person and the association unit associates a person who is in a predetermined relationship in the voice obtained by the voice obtaining unit and the extracted person.
[18] In the non-transitory computer-readable medium storing the association program according to any one of [13] to [17], the association program may further cause the computer to function as a fifth specification unit that specifies a movement of the mouth of the extracted person and the association unit may associate the person who is in a predetermined relationship with the movement of mouth specified by the fifth specification unit with the extracted person.
[19] In the non-transitory computer-readable medium storing the association program according to any one of [13] to [18], the association program may further cause the computer to function as an attribute obtaining unit that obtains an attribute of the extracted person and a group attribute specification unit that specifies an attribute of a group formed with a plurality of persons associated by the association unit based on the obtained attribute.
[20] In the non-transitory computer-readable medium storing the association program according to any one of [13] to [19], the association program may further cause the computer to function as an obtaining unit that obtains information about a product purchased by the extracted person, and the association unit may associate the information with a plurality of persons associated.
[21] In the non-transitory computer-readable medium storing the association program according to any one of [13] to [19], the association program may further cause a computer to function as an obtaining unit that obtains member information of the extracted person and the association unit may associate the member information with a plurality of persons associated.
[22] According to still another aspect of the present invention, there is provided a non-transitory computer-readable medium storing an association program causing a computer to function as an extracting unit that extracts a person and a vehicle from an image captured by a camera, a specification unit that specifies a movement of a person getting into the vehicle or getting out of the vehicle, and an association unit that associates a person who is in a predetermined relationship with the vehicle into which or out of which the person gets in a case where the specification unit specifies the movement of the person.
[23] According to still another aspect of the present invention, there is provided a non-transitory computer-readable medium storing an association program causing a computer to function as an extracting unit that extracts a person and a product from an image captured by a camera, a specification unit that specifies a movement of a product among a plurality of persons, and an association unit that associates the plurality of persons among which the product is moved with each other in a case where the specification unit specifies the movement of the product.
[24] According to still another aspect of the present invention, there is provided a non-transitory computer-readable medium storing an association program causing a computer to function as an extracting unit that extracts a person and a container from an image captured by a camera, a specification unit that specifies a movement of the container among a plurality of persons, and an association unit that associates the plurality of persons among which the container is moved with each other in a case where the specification unit specifies the movement of the container.
[25] According to still another aspect of the present invention, there is provided an information processing method causing a computer to execute a process including: extracting, as extraction processing, a person, a container, and a product from an image captured by a camera, specifying, as first specification processing, a movement of the product being transferred into or from the container, and associating, as association processing, a person who is in a predetermined relationship with the container into or from which the product is transferred in a case where the first specification processing specifies the movement of the product as association processing.
[26] In the information processing method according to [25], the process may further include specifying, as second specification processing, a movement of the product among a plurality of persons, in a case where the first specification processing specifies the movement, the association processing may set a time at which the movement is specified as a reference time and in a case where the second specification processing specifies the movement of the product within a time period determined in advance based on the reference time, the association processing may associate the a plurality of persons among which the product is moved with the container.
[27] In the information processing method according to [25] or [26], the process may further include specifying a movement of a container among a plurality of persons as third specification processing, and in a case where a third specification processing specifies the movement of the container, the association processing may associate the plurality of persons with each other.
[28] In the information processing method according to any one of [25] to [27], the process may further include specifying a line-of-sight or direction of the extracted person as fourth specification processing, and the association processing may associate a person who is in a predetermined relationship with the line-of-sight or direction specified by the fourth specification processing with the extracted person.
[29] In the information processing method according to any one of [25] to [28], the process may further include obtaining a voice of the extracted person as voice obtaining processing, and the association processing may associate a person who is in a predetermined relationship in the voice obtained by the voice obtaining processing with the extracted person.
[30] In the information processing method according to any one of [25] to [29], the process may further include specifying a movement of the mouth of the extracted person as fifth specification processing, and the association processing associates a person who is in a predetermined relationship with the movement of mouth specified by the fifth specification processing with the extracted person.
[31] In the information processing method according to any one of [25] to [30], the process may further include obtaining an attribute of the extracted person as attribute obtaining processing and specify an attribute of a group formed with a plurality of persons associated with the association processing based on the obtained attribute as group attribute specification processing.
[32] In the information processing method according to any one of [25] to [31], the process may further include obtaining information about a product purchased by the extracted person as obtaining processing, and the association processing may associate the information with a plurality of persons associated.
[33] In the information processing method according to any one of [25] to [31], the process may further include obtaining member information of the extracted person as obtaining processing, and the association processing may associate the member information with a plurality of persons associated.
[34] According to still another aspect of the present invention, there is provided an information processing method causing a computer to execute a process, the process including, extracting a person and a vehicle from an image captured by a camera as extraction processing, specifying a movement of a person getting into the vehicle or getting out of the vehicle as specification processing, and associating a person who is in a predetermined relationship with the vehicle into which or out of which the person gets in a case where the specification processing specifies the movement of the person as association processing.
[35] According to still another aspect of the present invention, there is provided an information processing method causing a computer to execute a process, the process including, extracting a person and a product from an image captured by a camera as extraction processing, specifying a movement of a product among a plurality of persons as specification processing, and associating the plurality of persons among which the product is moved with each other in a case where the specification processing specifies the movement of the product as specification processing.
[36] According to still another aspect of the present invention, there is provided an information processing method causing a computer to execute a process, the process including, extracting a person and a container from an image captured by a camera as extraction processing, specifying a movement of the container among a plurality of persons as specification processing, and associating the plurality of persons among which the container is moved with each other as specification processing in a case where the specification processing specifies the movement of the container.
[37] According to still another aspect of the present invention, there is provided an information processing device that includes an extracting unit that extracts a person, a container, and a product from an image captured by a camera, a specification unit that specifies a movement of the product being transferred into or from the container, and an association unit that associates a person who is in a predetermined relationship with the container into or from which the product is transferred in a case where the specification unit specifies the movement of the product.
[38] According to still another aspect of the present invention, there is provided an information processing device that includes an extracting unit that extracts a person and a vehicle from an image captured by a camera, a specification unit that specifies a movement of a person getting into the vehicle or getting out of the vehicle, and an association unit that associates a person who is in a predetermined relationship with the vehicle into which or out of which the person gets in a case where the specification unit specifies the movement of the person.
[39] According to still another aspect of the present invention, there is provided an information processing device that includes an extracting unit that extracts a person and a product from an image captured by a camera, a specification unit that specifies a movement of a product among a plurality of persons, and an association unit that associates the plurality of persons among which the product is moved with each other in a case where the specification unit specifies the movement of the product.
[40] According to still another aspect of the present invention, there is provided an information processing device that includes an extracting unit that extracts a person and a container from an image captured by a camera, a specification unit that specifies a movement of the container product among a plurality of persons, and an association unit that associates the plurality of persons among which the container is moved with each other in a case where the specification unit specifies the movement of the container.

### Advantageous Effects of Invention

According to [1], [13], [25], or [37], it is possible to associate the person with the container.

According to [2], [14], or [26], it is possible to associate the persons with each other based on the movement within a time period determined in advance based on the reference time.

According to [3], [15], or [27], it is possible to associate the persons with each other based on a movement among the plurality of persons.

According to [4], [16], or [28], it is possible to associate the line-of-sight or direction of the person with a person who is in a predetermined relationship.

According to [5], [17], or [29], it is possible to associate the person who is in a predetermined relationship based on the voice.

According to [6], [18], or [30], it is possible to associate the movement of the mouth of the person with the person who is in a predetermined relationship.

According to [7], [19], or [31], it is possible to specify an attribute of a group based on the attribute of the person.

According to [8], [20], or [32], it is possible to associate the associated person and information about the purchased product.

According to [9], [21], or [33], it is possible to associate the associated person with member information.

According to [10], [22], [34], or [38], it is possible to associate the person with the vehicle.

According to [11], [23], [35], or [39], it is possible to associate the persons based on the movement of the product among a plurality of persons.

According to [12], [24], [36], or [40], it is possible to associate the persons based on the movement of the container among a plurality of persons.

### Brief Description of Drawings

[Fig. 1] Fig. 1 is a schematic diagram illustrating an example of a configuration of a real store.
[Fig. 2] Fig. 2 is a block diagram illustrating an example of a configuration of an information processing device according to an embodiment.
[Fig. 3] Fig. 3 is a schematic diagram illustrating an example of a configuration of association information.
[Fig. 4] Fig. 4 is a schematic diagram illustrating an example of a pattern of a movement specified by a specification unit, Fig. 4(a) illustrates a situation where a customer grasps a product and Fig. 4(b) illustrates a situation where the customer puts the product in a cart.
[Fig. 5] Fig. 5 is a schematic diagram illustrating another example of the pattern of the movement specified by a specification unit, Fig. 5(a) illustrates a situation where a customer grasps a product, and Fig. 5(b) illustrates a situation where the customer puts the product in a cart.
[Fig. 6] Fig. 6 is a schematic diagram illustrating another example of the pattern of the movement specified by a specification unit, Fig. 6(a) illustrates a situation where a customer grasps a product, Fig. 6(b) illustrates a situation where the product is handed over to a customer from another customer, and Fig. 6(c) illustrates a situation where the customer puts the product in a cart.

### Description of Embodiments

### [Embodiment]

### (Configuration of Real Store)

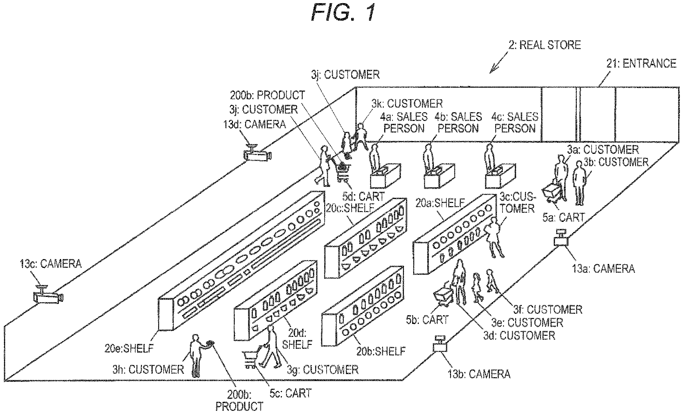

Fig. 1 is a schematic diagram illustrating an example of a configuration of a store.

The real store 2 is a retail store, for example, a supermarket, and a plurality of products 200a, 200b, ... (hereinafter, may be collectively referred to as a product 200) are installed on shelves 20a to 20e. The customers 3a to 3k enter the real store 2 through an entrance 21, respective customers go around the real store 2 together with carts 5a to 5d, carries the product 200 by the carts 5a to 5d, the payment is settled in the registers by the sales persons 4a to 4c. When the payment is settled in the registers, sales data such as a point of sale (POS) system is saved in a database which is not illustrated.

In the real store 2, the cameras 13a to 13d are installed, the customers 3a to 3k are recognized by an information processing device 1 which will be described later as persons from the video image captured by the camera 13, and matters about customers with whom respective customers 3a to 3k constitute a group. Here, the "group" is regarded as a set of customer associated with each other.

An omnidirectional camera can be used as the camera 13 in addition to a normal camera. The camera 13 may be a camera that captures the video image and also be a camera that captures a still image at predetermined intervals. It is regarded that an installation position of the camera 13 is registered in advance and a coordinate in an image of the captured video images is correlated with a position coordinate within the real store 2.

Here, the "video image" is a set of a plurality of frames (still images) captured in time-series and the plurality of frames are reproduced in time-series.

### (Configuration of Information Processing Device)

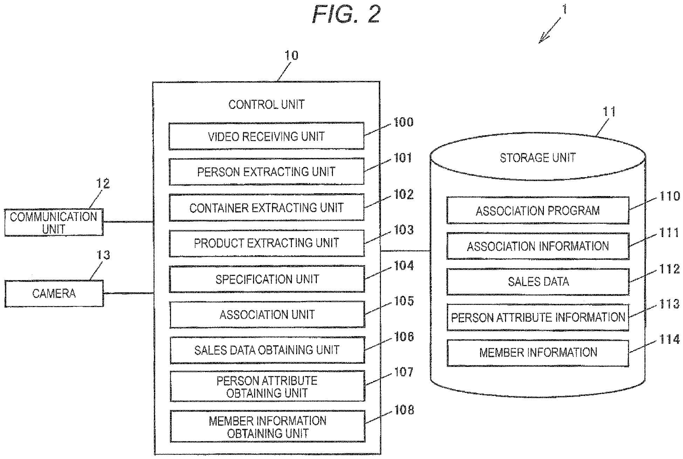

Fig. 2 is a block diagram illustrating an example of a configuration of an information processing device according to an embodiment.

The information processing device 1 is constituted with a central processing unit (CPU) or the like, controls respective units, includes a control unit 10 that executes various programs, a storage unit 11 that is constituted with a storage medium such as a flash memory and stores information, a communication unit 12 that communicates with the outside through a network, and a camera 13 that can capture the video image or the still image.

The control unit 10 executes an association program 110 which will be described later to function as a video image receiving unit 100, a person extracting unit 101, a container extracting unit 102, a product extracting unit 103, a specification unit 104, an association unit 105, a sales data obtaining unit 106, a person attribute obtaining unit 107, and a member information obtaining unit 108.

The video image receiving unit 100 receives video image information captured and generated by the camera 13.

In a case where an image of person is included in all or some of frames of the video image information received by the video image receiving unit 100, the person extracting unit 101 extracts the person. In a case where the number of persons is plural, the person extracting unit 101 may identify each person and may identify a person (sales person or the like) who is registered in advance based on an image registered in advance. The image registered in advance may be converted into a feature amount. The feature amount is obtained by, for example, extracting a feature point from the image by Difference of Gaussians operation and extracting a SIFT feature amount from the feature point. As another example of the feature amount, a fast invariant transform (FIT) feature amount generated from the gradient information of the extracted feature point and a point of the higher scale of the extracted feature point may be used.

A learning model may be generated from a plurality of images registered in advance and a person may be identified using the learning model. The person extracting unit 101 may regard the sales person as a target not to be identified from the extracted persons. For example, in a case where the sales person wears uniform, the feature amount is generated from the image of the uniform. It is possible to regard the sales person as a target not to be identified from the image of the extract person using the feature amount. Identification of the sales person and the customer is not limited to the uniform and the feature amount may be generated using another image such as a name plate.

In the following description, it is regarded that similar methods are used also regarding the container extracting unit 102 and the product extracting unit 103 to extract a container and a product.

In a case where an image of a cart as an example of a container is included in some or all of frames of the video image received by the container extracting unit 102 and the video image receiving unit 100, movement cart is extracted. Characters, numbers, marks, or the like may be attached to a cart in order to identify the cart.

In a case where an image of a product is included in some or all of frames of the video image received by the video image receiving unit 100, the product extracting unit 103 extracts movement product. Characters, numbers, marks, or the like may be attached to a product in order to identify the product.

The specification unit 104 specifies whether a movement of a person extracted by the person extracting unit 101, a movement of a cart extracted by the container extracting unit 102, and a movement of a product extracted by the product extracting unit 103 correspond to any of patterns of a movement determined in advance. The specification unit 104 may specify only a single pattern or may also identify a plurality of patterns to be specified. The specification unit 104, as will be described later, implements specifying a movement of the product which is put or withdrawn into or from a container, as a first specification unit, specifying a movement of the product among a plurality of persons, as a second specification unit, specifying a movement of the container among a plurality of persons, as a third specification unit, specifying the line-of-sight or direction of a person, as a fourth specification unit, specifying a movement of the mouth of a person as a fifth specification unit, and specifying a movement of a person getting into a vehicle or getting out of the vehicle, as a sixth specification unit.

The association unit 105 performs association based on the pattern specified by the specification unit 104. For example, there are a case where the extracted person extracted by the person extracting unit 101 is associated with the container extracted by the container specification unit 102 as a pattern of first association, a case where a plurality of persons extracted by the person extracting unit 101 are associated with each other as a pattern of second association, and a case where a plurality of persons extracted by the person extracting unit are associated with the container specification unit 102 as a pattern of third association.

The association unit 105 may conduct only a pattern of single association or may conduct patterns of a plurality of associations. The number of associations to be performed by the association unit 105 is not limited to one-time. That is, the association can be repeatedly performed. For example, at first, the association unit 105 associates a cart 5a with a customer 3a. Thereafter, the association unit 105 is also able to associate the cart 5a and the customer 3b. In this case, the cart 5a, the customer 3a, and the customer 3b are associated with each other. In other words, the customers 3a and 3b are recognized as a group. The association unit 105 stores information with which a person is associated in the storage unit 11 as association information 111.

In a case where the payment is settled in a register, the sales data obtaining unit 106 obtains sales data from a database which is not illustrated and in which information such as the POS system is stored and stores the obtained sales data in the storage unit 11 as sales data 112. The sales data referred herein is data, for example, the kind of purchased product, the number of purchases, the payment amount, or the payment time, capable of being obtained from the POS system.

The person attribute obtaining unit 107 obtains attribution information such as an age, a sex, regional information (details will be described later), or the like from the image of a person extracted by the person extracting unit 101 and stores the obtained attribution information in the storage unit 11 as person attribute information 113.

The member information obtaining unit 108 obtains member information in which a face photograph, a name, a sex, an age, an address, a telephone number, a purchase history of a customer, from a database which is not illustrated and stores the obtained member information in the storage unit 11 as member information 114.

The storage unit 11 stores an association program 110 that causes the control unit 10 to operate as respective components 100 to 108 described above, association information 111, sales data 112, person attribute information 113, and member information 114, or the like.

### (Operation of Information Processing Device)

Next, actions of the present embodiment will be described.

First, the camera 13 captures an image of customers 3a to 3k, products 200a and 200b, carts 5a to 5d and the like in the real store 2 and generates video image information.

The video image receiving unit 100 of the information processing device 1 receives the video image information captured and generated by the camera 13.

Next, in a case where an image of a person is included in all or some of frames of the video image received by the video image receiving unit 100, the person extracting unit 101 extracts movement person. In a case where the number of persons is plural, the person extracting unit 101 identifies each person and identifies a person (sales person, customer who frequently visits the store, or the like) who is registered in advance based on an image registered in advance.

Next, in a case where an image of a cart as an example of a container is included all or some of the video images received by the video image receiving unit 100, the container extracting unit 102 extracts movement cart. In a case where a plurality of carts exist in the image, each cart is identified. In a case where the cart is identified, a character, an image, or the like may be attached to each cart in order to identify the cart and the cart identified at once may also be traced thereafter.

Next, in a case where an image of a product is included all or some of the video images received by the video image receiving unit 100, the product extracting unit 103 may extracts movement product. In a case where a plurality of products exist in the image, each product may be identified or may not be identified. In a case where the product is identified, characters, numbers, marks, or the like may be attached to the product in order to identify the product and the image of the product may be identified by recognition of an image registered in advance.

Next, the specification unit 104 specifies whether a movement of the person extracted by the person extracting unit 101, a movement of the cart extracted by the container extracting unit 102, and a movement of the product extracted by the product extracting unit 103 correspond to any of patterns of movements determined in advance.

In the following, a pattern of a movement to be specified by the specification unit 104 will be described.

### (Pattern 1)

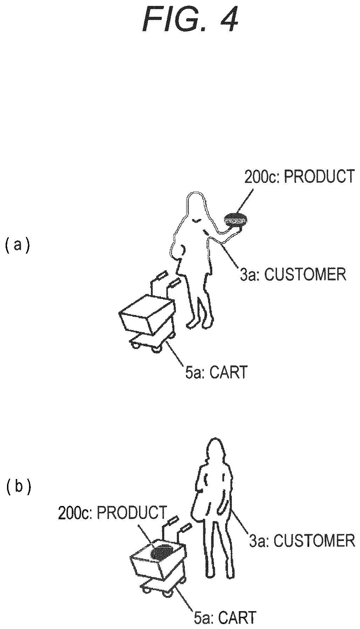

Fig. 4 is a schematic diagram illustrating an example of a pattern of a movement specified by the specification unit 104.

In a case where the customer 3a who pushes the cart 5a or is in the vicinity of the cart 5a as illustrated in Fig. 4(a) takes the product 200c by the hand and puts the product 200c in the cart 5a as illustrated in Fig. 4(b), the specification unit 104 specifies movements of the customer 3a, the cart 5a, and the product 200c as "Pattern 1" (first specification unit).

Next, the association unit 105 associates the person extracted by the person extracting unit 101 with the container extracted by the container specification unit 102 based on the pattern of the movement specified by the specification unit 104.

In a case where the "Pattern 1" indicated in Fig. 4 is specified, the association unit 105 associates the customer 3a with the cart 5a.

Although a case where the product 200c is put into the cart 5a is indicated in the "Pattern 1", the specification unit 104 specifies a movement of withdrawing the product 200c which is put into the cart 5a as "Pattern 1'", and in a case where the "Pattern 1'" is specified, the association unit 105 associates the customer 3a with the cart 5a.

In the "Pattern 1", in a case where the cart 5a pushes the cart 5a for a time equal to or more than a predetermined time or a case where the customer 3a is in a certain range irrespective of the presence or absence of the product 200c, the association unit 105 may also associate the customer 3a with the cart 5a.

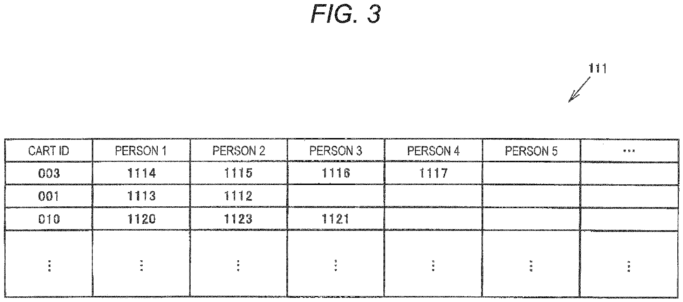

Fig. 3 is a schematic diagram illustrating an example of a configuration of the association information 111.

The association information 111 corresponds to a cart ID of the cart extracted by the container extracting unit 102 and includes a single or plurality of persons ID who is associated with movement cart ID and extracted by the person extracting unit 101.

For example, in a case where two persons of which person IDs are "1113" and "1112" are associated with a cart of which a cart ID is "001", "1113" and "1112" are described into fields of the person 1 and the person 2. The person 1, the person 2, the person 3, ... may also be described in order of extraction or described in order of the distance to the cart or the time within a certain range.

The association unit 105 performs association so as to update information of the association information 111. In a case where the information corresponds to a predetermined condition, the person ID associated with the cart ID described in the association information 111 may also be reset. The predetermined condition includes a case where the person described in the association information 111 has settled the payment in the register or a case where the cart described in the association information 111 is returned to a cart placement site. Whether the person described in the association information 111 has completed the payment in the register can be confirmed using the sales data obtaining unit 106. Whether the cart described in the association information 111 is returned to the cart placement site or not can be confirmed by whether the cart exists in a predetermined place or not (for example, cart placement site). The condition in a case of resetting or a method of performing confirmation is not limited to the contents described above. Resetting of the association information 111 may also be similarly applied to other patterns which will be described later.

### (Another example of Pattern 1)

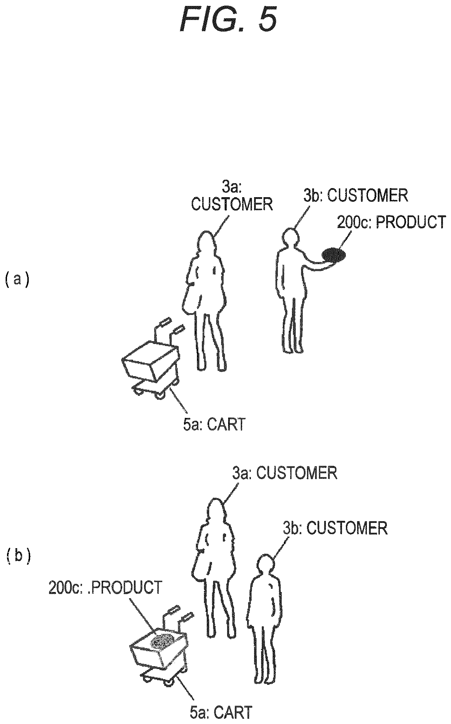

Fig. 5 is a schematic diagram illustrating another example of the pattern of the movement specified by the specification unit 104.

In a case where the customer 3b who is in the vicinity of the cart 5a takes the product 200c by the hand as illustrated in Fig. 5(a) and puts the product 200c into the cart 5a as illustrated in Fig. 5(b), the specification unit 104 specifies movements of movement customer 3b, the cart 5a, and the product 200c as the "Pattern 1". Furthermore, the customer 3a who pushes the cart 5a into which the product is put or is in the vicinity of the cart 5a stands. In such a case, the association unit 105 may associate the customers 3a and 3b with the cart 5a by regarding the cart 5a and the customer 3a as being in a predetermined relationship.

In this case, the customers 3a and 3b may also be associated with the cart 5a as a condition that the customer 3a is already associated with the cart 5a (for example, in a case where the customer 3a and the cart 5a correspond to the Pattern 1). That is, if the customer 3a is not associated with the cart 5a, only the customer 3b and the cart 5b may also be associated with each other. Otherwise, first, the cart 5a and the customer 3b are correlated with each other and then, in a case where the cart 5a and the customer 3a correspond to the Pattern 1 described above, the customer 3a may also be added to the cart 5a with which the customer 3b is associated to be associated.

### (Pattern 2)

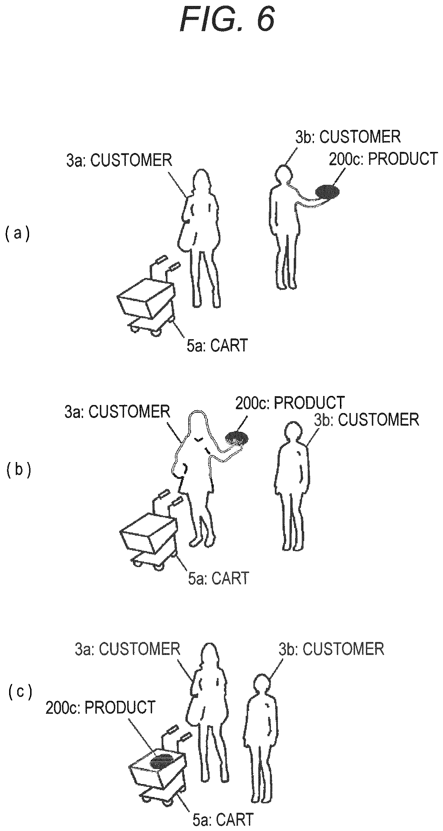

Fig. 6 is a schematic diagram illustrating another example of the pattern of the movement specified by the specification unit 104.

As illustrated in Fig. 6(a), the customer 3a who pushes the cart 5a or is in the vicinity of the cart 5a stands and the customer 3b takes the product 200c by the hand. Next, as illustrated in Fig. 6(b), in a case where the product 200c is handed over to the customer 3a from the customer 3b, the specification unit 104 specifies movements of movement customers 3a and 3b, and the product 200c as "Pattern 2" (second specification unit). Next, in a case where the customer 3a puts the product 200c in the cart 5a as illustrated in Fig. 6(c), the specification unit 104 specifies movements of movement customers 3a, the cart 5a, and the product 200c as "Pattern 1".

In a case where the "Pattern 2" is specified by the second specification unit of the specification unit 104 at first, the customer 3a is associated with the customer 3b. In this case, the person ID of the customer 3a is associated with the person ID of the customer 3b in the association information 111. That is, the cart ID of the cart 5a is not necessarily associated with the person ID of the customer 3a or the customer 3b. Next, in a case where the "Pattern 1" is specified by the first specification unit, the customer 3a is associated with the cart 5a. In this case, the person ID of the customer 3a and the person ID of the customer 3b are already associated with each other in the association information 111. Accordingly, in a case where the "Pattern 1" is specified, the person ID of the customer 3a, the person ID of the customer 3b and the cart ID of the cart 5a are associated with each other.

A movement of handing over the cart 5a which is the container or moving the cart 5a to the customer 3b from the customer 3a may be specified as "Pattern 3" (third specification unit). In this case, the association unit 105 associates the customers 3a and 3b with each other. The customers 3a and 3b and the cart 5a may also be associated with each other.

Although the "Pattern 1" to the "Pattern 3" are described for the movements of the product in the register before the settlement of payment, the pattern can be set regarding the movement of the product or the customer during the settlement of payment or the movement of the product or the customer after the settlement of payment without being limited only to before the settlement of payment.

When it is during the settlement of payment, for example, in a case where a separate customer brings a product late while a certain customer is settling the payment in the register, in a case where the product is added to the cart or in a case where the product is handed over to the sales person in the register section without putting the product into the cart, the customer may be associated with the cart.

When it is after the settlement of payment, for example, in a case where a product for which the payment is settled is handed over to a certain customer to another customer, both customers may be associated with each other as being belonged to the same group.

Next, in a case where any of the associated customers has settled the payment in the register, the sales data obtaining unit 106 obtains sales data 112 of the POS system or the like corresponding to movement register from a database which is not illustrated and associates the obtained sales data with the cart ID of the association information 111 to be stored in the storage unit 11.

The person attribute obtaining unit 107 obtains attribution information such as an age, a sex, regional information (details will be described later) or the like from the image of a person extracted by the person extracting unit 101 and associates the obtained attribution information with each user of the association information 111 to be stored in the storage unit 11 as person attribute information 113.

In a case where the customer uses a membership card when settling the payment in the register, the member information obtaining unit 108 obtains member information associated with movement membership card from a database which is not illustrated and associates the obtained member information with the association information 111 to be stored in the storage unit 11 as member information 114.

The sales data 112, the person attribute information 113, and the member information 114 described above are used for sales analysis, behavior analysis of a group, or the like together with the association information 111 which defines the group. The group ID may be assigned to the member information. In this case, the group ID may be updated with the store-visiting frequency or may be accumulated.

### (Effects of Embodiment)

According to the embodiment, it is possible to specify a person who is in the vicinity of a cart as an example a container and each movement such as putting and withdrawing of a product for the cart and associate the cart with the person by the movement. Otherwise, it is possible to specify a movement such as handing over of a product between the persons and a movement such as a movement of a cart between the persons and associate the persons with each other by the movement.

### [Other Embodiments]

The present invention is not limited to the embodiment described above and various modifications may be made within a scope without departing from a gist of the present invention.

In the present embodiment described above, although the customers who act in the real store 2 are associated with each other, customers who act in a structure may be associated with each other without being limited to the real store 2. For example, a restaurant, a shopping mall, a building, an airport, a station, a hospital, a school, a leisure facility, or the like is included as the structure. The structure may be a moving object such as an airplane or a ship. Sales information about a customer corresponds to a menu ordered by the customer or an amount paid in the register. In a case of a building or an airport, activity contents of the sales person who works in the building or the airport are specified.

The specification unit 104 may specify the line-of-sight or direction of the face of the customer as a "fourth pattern" (fourth specification unit). The association unit 105 may also associate a customer with another customer toward which the customer directs the line-of-sight or direction of the face for a time equal to or more than a predetermined time. The specification unit 104 may specify a movement of the mouth as a "fifth pattern" (fifth specification unit). The association unit 105 may also associate the customers who are talking with each other.

The cart is an example of a container into which the product is put and may also be a basket, a shopping bag or the like.

In the present embodiment, a person is associated with a container such as a cart. However, a person may be associated with a vehicle such as a car, a motorcycle, or the like without being limited to the container such as the cart. For example, a camera is installed in a parking lot and a car is captured. A movement of the customer getting out of a certain car or getting into the car is specified using the specification unit 104. The specification unit 104 specifies a movement of the customer getting out of a certain car or getting into the car as "Pattern 6" (sixth specification unit).

Next, it is regarded that the association unit 105 associates each of these customers with the car and handles as the group. For example, in a case where a plurality of customers are get out of the car, the association unit 105 can associate the plurality of persons with each other. In a case where it is possible to capture an image of a number plate of a car, regional information may be obtained from information of the captured number plate as attribution information.

In a case of a vehicle such as a car or a motorcycle, the specification unit 104 may not specify a movement in a case where movement vehicle is a commercial vehicle such as a delivery vehicle for which the customer is not allowed to get on. In a case where the commercial vehicle such as a delivery vehicle is regarded as a non-target, an image or a number plate, or the like of the vehicle regarded as the non-target may be registered and the vehicle regarded as the non-target may be identified using the image or the number plate.

The specification unit 104 may include a specification unit that specifies at least one of patterns. For example, the specification unit 104 may include a specification unit that specifies only the "Pattern 1" or a specification unit that specifies the "Pattern 1" to the "Pattern 6".

Regarding the association unit 105, for example, in a case where the customer 3a pushes the cart 5a for a time equal to or more than a predetermined time or a case where the customer 3a is in a certain range of the cart 5a irrespective of the presence or absence of the product 200c, the association unit 105 may also associate the customer 3a with the cart 5a. As such, the association unit 105 determines whether a relationship between the customer and the cart is in a predetermined relationship or not using image processing and in a case where it is determined that the relationship is the predetermined relationship, the association unit 105 may also have a configuration in which the customer is associated with the cart. The determination operation may be executed by a different unit and is not necessarily executed by the association unit 105.

A voice obtaining unit that obtains the conversation voice may also be provided and the obtained voice may be analyzed to specify a pattern of movement conversation contents and the association unit 105 may associate the customers with each other based on a pattern of conversation contents.

The person attribute obtaining unit 107 may be further provided with a unit that specifies whether the group is a category of any of a family, a couple, a party according to an attribute of a person that belongs to a group to be obtained. A purchase pattern may be analyzed from the specified category of the group and sales data.

As another example for analysis, a difference between the product taken by the hand of the customer and the product which is indicated in sales data and is actually purchased may be taken and a product taken by the hand but not bought may be detected and used as analysis information.

Although a person, a product, a cart, or the like is extracted from an image in the embodiment, the identification information and the current location may be obtained from an IC chip embedded in a mobile phone, a card, or the like without being limited thereto, and the current location may be obtained using the GPS.

In the embodiment, although functions of respective units 100 to 108 of the control unit 10 are implemented by a program, all or some of respective units may be implemented by hardware such as the ASIC. The program used in the embodiment may also be provided by being stored in a recording medium such as a CD-ROM. Replacement, deletion, addition, or the like of steps described in the embodiment may be made within a range without changing the gist of the present invention.

### Industrial Applicability

At least one of the embodiments of the present invention may be utilized in, for example, data analysis regarding a sales product.

Although the present invention is described in detail or described with reference to specific embodiments, it is evident to a person skilled in the art that various modifications or changes may be made without departing from a spirit of the present invention.

This application claims the benefit of described in Japanese Patent Application No. 2014-210002 filed on October 14, 2014, the entire contents of which are incorporated herein by reference.

### Reference Signs List

- 1:: information processing device
- 2:: store
- 3a∼3k:: customer
- 4a∼4c:: sales person
- 5a∼5d:: cart
- 10:: control unit
- 11:: storage unit
- 12:: communication unit
- 13a∼13d:: camera
- 20a∼20e:: shelf
- 21:: entrance
- 100:: video image receiving unit
- 101:: person extracting unit
- 102:: container extracting unit
- 103:: product extracting unit
- 104:: specification unit
- 105:: association unit
- 106:: sales data obtaining unit
- 107:: person attribute obtaining unit
- 108:: member information obtaining unit
- 110:: association program
- 111:: association information
- 112:: sales data
- 113:: person attribute information
- 114:: member information
- 200a∼200c:: product

## Claims

1. An association program causing a computer to function as:
an extracting unit that extracts a person, a container, and a product from an image captured by a camera;
a first specification unit that specifies a movement of the product transferred into or from the container; and
an association unit that associates a person who is in a predetermined relationship with the container into or from which the product is transferred in a case where the first specification unit specifies the movement of the product.

2. The association program according to claim 1, further causing the computer to function as a second specification unit that specifies a movement of the product among a plurality of persons,
wherein, in a case where the first specification unit specifies the movement of the product, the association unit sets a time at which the movement is specified as a reference time, and, in a case where the second specification unit specifies the movement of the product within a time period determined in advance based on the reference time, the association unit associates the plurality of persons among which the product is moved with the container.

3. The association program according to claim 1 or 2, further causing the computer to function as a third specification unit that specifies a movement of the container among a plurality of persons,
wherein, in a case where the third specification unit specifies the movement of the container, the association unit associates the plurality of persons with each other.

4. The association program according to any one of claims 1 to 3, further causing the computer to function as a fourth specification unit that specifies a line-of-sight or direction of the extracted person,
wherein the association unit associates a person who is in a predetermined relationship with the line-of-sight or direction specified by the fourth specification unit with the extracted person.

5. The association program according to any one of claims 1 to 4, further causing the computer to function as a voice obtaining unit that obtains voice of the extracted person,
wherein the association unit associates a person who is in a predetermined relationship in the voice obtained by the voice obtaining unit with the extracted person.

6. The association program according to any one of claims 1 to 5, further causing the computer to function as a fifth specification unit that specifies a movement of a mouth of the extracted person,
wherein the association unit associates a person who is in a predetermined relationship with the movement of the mouth specified by the fifth specification unit with the extracted person.

7. The association program according to any one of claims 1 to 6, further causing the computer to function as:
an attribute obtaining unit that obtains an attribute of the extracted person; and
a group attribute specification unit that specifies an attribute of a group formed with a plurality of persons associated with the association unit based on the obtained attribute.

8. The association program according to any one of claims 1 to 7, further causing the computer to function as an obtaining unit that obtains information about a product purchased by the extracted person,
wherein the association unit associates the information with a plurality of persons associated.

9. The association program according to any one of claims 1 to 7, further causing the computer to function as an obtaining unit that obtains member information of the extracted person,
wherein the association unit associates movement member information with a plurality of persons associated.

10. An association program causing a computer to function as:
an extracting unit that extracts a person and a vehicle from an image captured by a camera;
a specification unit that specifies a movement of a person getting into the vehicle or getting out of the vehicle; and
an association unit that associates a person who is in a predetermined relationship with the vehicle into which or out of which the person gets in a case where the specification unit specifies the movement of the person.

11. An association program causing a computer to function as:
an extracting unit that extracts a person and a product from an image captured by a camera;
a specification unit that specifies a movement of a product among a plurality of persons; and
an association unit that associates the plurality of persons among which the product is moved with each other in a case where the specification unit specifies the movement of the product.

12. An association program causing a computer to function as:
an extracting unit that extracts a person and a container from an image captured by a camera;
a specification unit that specifies a movement of the container among a plurality of persons; and
an association unit that associates the plurality of persons among which the container is moved with each other in a case where the specification unit specifies the movement of the container.

13. A non-transitory computer-readable medium storing an association program causing a computer to function as:
an extracting unit that extracts a person, a container, and a product from an image captured by a camera;
a first specification unit that specifies a movement of putting or withdrawing the product into or from the container; and
an association unit that associates a person who is in a predetermined relationship with the container into or from which the product is put or withdrawn in a case where the first specification unit specifies the movement of the product.

14. The non-transitory computer-readable medium storing the association program according to claim 13, further causing the computer to function as a second specification unit that specifies the movement of the product among a plurality of persons,
wherein in a case where the first specification unit specifies the movement of the product, the association unit sets a time at which the movement is specified as a reference time and in a case where the second specification unit specifies the movement of the product within a time period determined in advance based on the reference time, the association unit associates the a plurality of persons among which the product is moved with the container.

15. The non-transitory computer-readable medium storing the association program according to claim 13 or 14, further causing the computer to function as a third specification unit that specifies a movement of a container among a plurality of persons,
wherein in a case where the third specification unit specifies the movement of the container, the association unit associates the plurality of persons with each other.

16. The non-transitory computer-readable medium storing the association program according to any one of claims 13 to 15, further causing the computer to function as a fourth specification unit that specifies a line-of-sight or direction of the extracted person,
wherein the association unit associates a person who is in a predetermined relationship with the line-of-sight or direction specified by the fourth specification unit with the extracted person.

17. The non-transitory computer-readable medium storing the association program according to any one of claims 13 to 16 further causing the computer to function as a voice obtaining unit that obtains voice of the extracted person,
wherein the association unit associates a person who is in a predetermined relationship in the voice obtained by the voice obtaining unit and the extracted person.

18. The non-transitory computer-readable medium storing the association program according to any one of claims 13 to 17 further causing a computer to function as a fifth specification unit that specifies a movement of the mouth of the extracted person,
wherein the association unit associates a person who is in a predetermined relationship with the movement of the mouth specified by the fifth specification unit with the extracted person.

19. The non-transitory computer-readable medium storing the association program according to any one of claims 13 to 18, further causing a computer to function as:
an attribute obtaining unit that obtains an attribute of the extracted person; and
a group attribute specification unit that specifies an attribute of a group formed with a plurality of persons associated with the association unit based on the obtained attribute.

20. The non-transitory computer-readable medium storing the association program according to any one of claims 13 to 19 further causing a computer to function as an obtaining unit that obtains information about a product purchased by the extracted person,
wherein the association unit associates the information with a plurality of persons associated.

21. The non-transitory computer-readable medium storing the association program according to any one of claims 13 to 19 further causing a computer to function as an obtaining unit that obtains member information of the extracted person,
wherein the association unit associates the member information with a plurality of persons associated.

22. A non-transitory computer-readable medium storing an association program causing a computer to function as:
an extracting unit that extracts a person and a vehicle from an image captured by a camera;
a specification unit that specifies a movement of a person getting into the vehicle or getting out of the vehicle; and
an association unit that associates a person who is in a predetermined relationship with the vehicle into which or out of which the person gets in a case where the specification unit specifies the movement of the person.

23. A non-transitory computer-readable medium storing an association program causing a computer to function as:
an extracting unit that extracts a person and a product from an image captured by a camera;
a specification unit that specifies a movement of a product among a plurality of persons; and
an association unit that associates the plurality of persons among which the product is moved with each other in a case where the specification unit specifies the movement of the product.

24. A non-transitory computer-readable medium storing an association program causing a computer to function as:
an extracting unit that extracts a person and a container from an image captured by a camera;
a specification unit that specifies a movement of the container among a plurality of persons; and
an association unit that associates the plurality of persons among which the container is moved with each other in a case where the specification unit specifies the movement of the container.

25. An information processing method causing a computer to execute a process, the process comprising:
extracting, as an extraction processing, a person, a container, and a product from an image captured by a camera;
specifying, as a first specification processing, a movement of putting or withdrawing the product into and from the container; and
associating, as an association processing, a person who is in a predetermined relationship with the container into or from which the product is put or withdrawn as association processing in a case where the first specification processing specifies the movement of the product.

26. The information processing method according to claim 25, the process further comprising:
specifying, as a second specification processing, the movement of the product among a plurality of persons,
wherein in a case where the first specification processing specifies the movement, the association processing sets a time at which the movement is specified as a reference time and in a case where the second specification processing specifies the movement of the product within a time period determined in advance based on the reference time, the association processing associates the a plurality of persons among which the product is moved with the container.

27. The information processing method according to claim 25 or 26, the process further comprising:
specifying, as a third specification processing, a movement of a container among a plurality of persons,
wherein in a case where a third specification processing specifies the movement of the container, the association processing associates the plurality of persons with each other.

28. The information processing method according to any one of claims 25 or 27, the process further comprising:
specifying, as a fourth specification processing, a line-of-sight or direction of the extracted person,
wherein the association processing associates a person who is in a predetermined relationship with the line-of-sight or direction specified by the fourth specification processing with the extracted person.

29. The information processing method according to any one of claims 25 or 28, the process further comprising:
obtaining, as a voice obtaining processing, a voice of the extracted person,
wherein the association processing associates a person who is in a predetermined relationship in the voice obtained by the voice obtaining processing with the extracted person.

30. The information processing method according to any one of claims 25 or 29, the process further comprising:
specifying, as a fifth specification processing, a movement of the mouth of the extracted person,
wherein the association processing associates a person who is in a predetermined relationship with the movement of mouth specified by the fifth specification processing with the extracted person.

31. The information processing method according to any one of claims 25 or 30, the process further comprising:
obtaining, as an attribute obtaining processing, an attribute of the extracted person; and
specifying, as a group attribute specification processing, an attribute of a group formed with a plurality of persons associated with the association processing based on the obtained attribute.

32. The information processing method according to any one of claims 25 or 31, the process further comprising:
obtaining, as an obtaining processing, information about a product purchased by the extracted person,
wherein the association processing associates the information with a plurality of persons associated.

33. The information processing method according to any one of claims 25 or 31, the process further comprising:
obtaining, as an obtaining processing, member information of the extracted person,
wherein the association processing associates the member information with a plurality of persons associated.

34. An information processing method causing a computer to execute a process, the process comprising:
extracting, as an extraction processing, a person and a vehicle from an image captured by a camera;
specifying, as a specification processing, a movement of the person getting into the vehicle or getting out of the vehicle; and
associating, as an association processing, a person who is in a predetermined relationship with the vehicle into which or out of which the person gets in a case where the specification processing specifies the movement of the person.

35. An information processing method causing a computer to execute a process, the process comprising:
extracting, as extraction processing, a person and a product from an image captured by a camera;
specifying, as specification processing, a movement of a product among a plurality of persons; and
associating the plurality of persons among which the product is moved with each other in a case where the specification processing specifies the movement of the product as the specification processing.

36. An information processing method causing a computer to execute a process, the process comprising:
extracting, as an extraction processing, a person and a container from an image captured by a camera;
specifying, as a specification processing, a movement of the container among a plurality of persons; and
associating the plurality of persons among which the container is moved with each other in a case where the specification processing specifies the movement of the container as the specification processing.

37. An information processing device, comprising:
an extracting unit that extracts a person, a container, and a product from an image captured by a camera;
a specification unit that specifies a movement of the product being transferred into or from the container; and
an association unit that associates a person who is in a predetermined relationship with the container into or from which the product is transferred in a case where the specification unit specifies the movement of the product.

38. An information processing device, comprising:
an extracting unit that extracts a person and a vehicle from an image captured by a camera;
a specification unit that specifies a movement of the person getting into the vehicle or getting out of the vehicle; and
an association unit that associates a person who is in a predetermined relationship with the vehicle into which or out of which the person gets in a case where the specification unit specifies the movement of the person.

39. An information processing device, comprising:
an extracting unit that extracts a person and a product from an image captured by a camera;
a specification unit that specifies a movement of the product among a plurality of persons; and
an association unit that associates the plurality of persons among which the product is moved with each other in a case where the specification unit specifies the movement of the product.

40. An information processing device, comprising:
an extracting unit that extracts a person and a container from an image captured by a camera;
a specification unit that specifies a movement of the container among a plurality of persons; and
an association unit that associates the plurality of persons among which the container is moved with each other in a case where the specification unit specifies the movement of the container.
